# EUROPÄISCHE PATENTSCHRIFT

(11) **EP 4 281 697 B1**
(45) Veröffentlichungstag und Bekanntmachung des Hinweises auf die Patenterteilung: **27.08.2025**
(21) Anmeldenummer: 22706222.1
(22) Anmeldetag: 19.01.2022
(51) Int. Cl.: F16L 37/084, F16L 37/12, F16L 37/14

(54) **GEGENSTECKVERBINDER ZUM VERBINDEN VON BAUTEILEN FÜR FLÜSSIGE ODER GASFÖRMIGE MEDIEN, SOWIE EINE STECKERBAUGRUPPE UND EIN VERFAHREN ZUM HERSTELLEN EINES DERARTIGEN GEGENSTECKVERBINDERS**
MATING CONNECTOR FOR CONNECTING COMPONENTS FOR LIQUID OR GASEOUS MEDIA, AND CONNECTOR ASSEMBLY AND METHOD FOR PRODUCING SUCH A MATING CONNECTOR
CONNECTEUR HOMOLOGUE POUR CONNECTER DES COMPOSANTS POUR DES MILIEUX LIQUIDES OU GAZEUX, ET ENSEMBLE CONNECTEUR ET PROCÉDÉ DE FABRICATION D'UN TEL CONNECTEUR HOMOLOGUE

(30) Priorität: 20.01.2021 AT 500272021
(43) Veröffentlichungstag der Anmeldung: 29.11.2023
(73) Patentinhaber: Henn GmbH & Co KG., 6850 Dornbirn (AT)
(72) Erfinder: ROHNER, Manuel, 6845 Hohenems (AT); HARTMANN, Harald, 6781 Bartholomäberg (AT)
(74) Vertreter: Burger, Hannes
(86) Internationale Anmeldenummer: PCT/AT2022/060015
(87) Internationale Veröffentlichungsnummer: WO 2022/155694

(56) Entgegenhaltungen:
- DE-A1- 19 743 825
- DE-U1- 202007 018 700

## Beschreibung

Die Erfindung betrifft einen Gegensteckverbinder zum Verbinden von Bauteilen für flüssige oder gasförmige Medien, sowie eine Steckerbaugruppe und ein Verfahren zum Herstellen eines derartigen Gegensteckverbinders.

Aus der EP 2 360 411 A1 ist eine gattungsgemäße Steckerbaugruppe mit einem Steckverbinder und einem Gegensteckverbinder bekannt. Der Steckverbinder zum Verbinden von Leitungen für flüssige oder gasförmige Medien umfasst eine Hülse, die eine Einstecköffnung aufweist. In die Einstecköffnung ist der Gegensteckverbinder einsteckbar. Weiters umfasst der Steckverbinder und eine die Hülse zumindest über einen Teil ihres Umfangs umgebende Rastfeder, welche zwischen einer Raststellung zum Verrasten des mit dem Steckverbinder zusammengesteckten Gegensteckverbinders und einer gegenüber der Hülse verrasteten Freigabestellung, in der die Verrastung mit dem Gegensteckverbinder gelöst ist und der Gegensteckverbinder aus der Einstecköffnung der Hülse herausziehbar ist, verstellbar ist. Die Rastfeder ragt zumindest in ihrer Raststellung über mindestens einen Abschnitt ihrer Längserstreckung, in welchem sie mit dem Gegensteckverbinder verrastbar ist, durch eine Durchtrittsöffnung der Hülse in den von der Hülse umgebenden Innenraum. Weiters ist die Rastfeder in ihrer verrasteten Freigabestellung an mindestens einer Raststelle der Rastfeder hinter einen Haltevorsprung der Hülse in eine Haltevertiefung der Hülse eingerastet. Der Haltevorsprung springt gegenüber der Haltevertiefung in axialer Richtung der Hülse vor.

Der Gegensteckverbinder der EP 2 360 411 A1 ist aufwendig herzustellen.

Weitere Steckverbinder sind aus der DE 20 2007 018 700 U1 und aus der DE 197 43 825 A1 bekannt.

Aufgabe der vorliegenden Erfindung war es, die Nachteile des Standes der Technik zu überwinden und einen Gegensteckverbinder zur Verfügung zu stellen, welcher einfach herzustellen ist.

Diese Aufgabe wird durch eine Vorrichtung und ein Verfahren gemäß den Ansprüchen gelöst.

Erfindungsgemäß ist ein Gegensteckverbinder zum Verbinden von Bauteilen für flüssige oder gasförmige Medien ausgebildet. Der Gegensteckverbinder umfasst einen Verbinderkörper mit:
- einem Einsteckabschnitt, welcher zum Einstecken in eine Aufnahmeöffnung eines Steckverbinders dient;
- einem Bauteilanschluss, welcher zur Verbindung mit einem der Bauteile dient.

Der Verbinderkörper ist als Blechumformteil ausgebildet.

Der erfindungsgemäße Gegensteckverbinder weist den Vorteil auf, dass er einfach herzustellen ist und darüber hinaus ein sehr geringes Gewicht bei einer für den Verwendungszweck ausreichenden Festigkeit aufweist.

Insbesondere kann vorgesehen sein, dass der Verbinderkörper als Tiefziehteil ausgebildet ist. Besonders ein als Tiefziehteil ausgebildeter Verbinderkörper ist einfach herzustellen.

Weiters kann vorgesehen sein, dass der Verbinderkörper einteilig ausgebildet ist. Ein einteilig ausgebildeter Verbinderkörper ist einfach herzustellen und weist eine geringe Fehleranfälligkeit auf.

Insbesondere kann vorgesehen sein, dass die zu verbindenden Bauteile beispielsweise in Form von Leitungen oder Schläuchen ausgebildet sind. Hierbei können die Leitungen mit dem Bauteilanschluss mittels einer Klemmverbindung gekoppelt werden.

Weiters ist es auch denkbar, dass zumindest eines der zu verbindenden Bauteile beispielsweise als Blechbauteil ausgebildet ist. Hierbei kann der Bauteilanschluss direkt mit dem Blechbauteil verschweißt werden. Weiters ist es auch denkbar, dass der Verbinderkörper mit dem Bauteil eingepresst oder verklebt wird. Alternativ ist auch eine Kombination aus Einpressung und Verklebung denkbar.

Weiters ist vorgesehen, dass der Verbinderkörper einen hülsenförmigen, im Querschnitt eine zentrale Längsachse des Verbinderkörpers umgebenden, ersten Mantelabschnitt und einen hülsenförmigen, im Querschnitt die zentrale Längsachse umgebenden, zweiten Mantelabschnitt aufweist, wobei der erste Mantelabschnitt vom zweiten Mantelabschnitt umgeben ist und der erste Mantelabschnitt mit dem zweiten Mantelabschnitt an einem ersten Längsende im Bereich des Einsteckabschnittes durch einen ersten Stirnwandabschnitt verbunden ist und wobei der zweite Mantelabschnitt im Bereich des Einsteckabschnittes einen zylindrischen Dichtabschnitt aufweist. Dies bringt den Vorteil mit sich, dass der Verbinderkörper eine ausreichende Stabilität aufweisen kann und darüber hinaus sämtliche Bauteile zur Realisierung der Funktionalität der Verbindung mit dem Steckverbinder aufweisen kann. Der zylindrischen Dichtabschnitt kann an einer Außenmantelfläche des zweiten Mantelabschnittes ausgebildet sein.

Ferner kann vorgesehen sein, dass im Bereich des Einsteckabschnittes sowohl der erste Mantelabschnitt als auch der zweite Mantelabschnitt ausgehend vom zylindrischen Dichtabschnitt zum ersten Längsende des Verbinderkörpers hin eine Querschnittsverjüngung aufweisen. Dies bringt den Vorteil mit sich, dass der Gegensteckverbinder einfach in den Steckverbinder eingesteckt werden kann. Darüber hinaus kann durch die Verjüngung die Stabilität des Verbinderkörpers weiter erhöht werden.

Darüber hinaus kann vorgesehen sein, dass der zweite Mantelabschnitt an der vom ersten stirnwandabschnittabgewandten Seite des zylindrischen Dichtabschnittes anschließend an den zylindrischen Dichtabschnitt eine Querschnittserweiterung aufweist. Dies bringt den Vorteil mit sich, dass durch die Querschnittserweiterung die Rastfeder aufgedrückt werden kann und somit das Fügen des Gegensteckverbinders mit dem Steckverbinder vereinfacht werden kann.

Vorteilhaft ist auch eine Ausprägung, gemäß welcher vorgesehen sein kann, dass der zweite Mantelabschnitt an der vom zylindrischen Dichtabschnitt abgewandten Seite in einem Abstand zur Querschnittserweiterung eine Anlagefläche für ein Arretierungselement des Steckverbinders aufweist. Dies bringt den Vorteil mit sich, dass durch diese Maßnahme das Arretierungselement den Gegensteckverbinder im Steckverbinder gut sichern kann.

Gemäß einer Weiterbildung ist es möglich, dass die Anlagefläche umlaufend ausgebildet ist und ein zweites Längsende des zweiten Mantelabschnittes bildet. Eine derart ausgebildete Anlagefläche ist einfach herzustellen und kann darüber hinaus eine ausreichende Stabilität aufweisen.

In einer alternativen Ausführungsvariante kann vorgesehen sein, dass ein Arretierschlitz ausgebildet ist, in welchem die Anlagefläche angeordnet ist, wobei der Arretierschlitz den zweiten Mantelabschnitt, insbesondere den Zylinderabschnitt, durchdringt und sich über einen Umfangsbereich des zweiten Mantelabschnittes erstreckt. Dies bringt den Vorteil mit sich, dass ein derartiger Arretierschlitz einfach herzustellen ist.

Darüber ist vorgesehen, dass eine Lasche ausgebildet ist, welche aus dem zweiten Mantelabschnitt nach außen gebogen ist, wobei sich die Lasche über einen Umfangsbereich des zweiten Mantelabschnittes erstreckt und wobei sich die Lasche über einen Längsbereich des zweiten Mantelabschnittes erstreckt. Eine derartige Lasche kann einfach als Verdrehsicherung dienen.

Weiters kann vorgesehen sein, dass der zweite Mantelabschnitt im Bereich eines zweiten Längsendes einen nach außen gebogenen Kragen aufweist. Dies bringt den Vorteil mit sich, dass ein derartiger nach außen gebogener Kragen als Axialanschlag dienen kann. Darüber hinaus kann der nach außen gebogene Kragen dem Verbinderkörper eine erhöhte Stabilität verleihen.

Gemäß einer besonderen Ausprägung ist es möglich, dass der erste Mantelabschnitt an einem zweiten Längsende eine Verjüngung aufweist. Dies bringt den Vorteil mit sich, dass der Gegensteckverbinder einfach mit einer Leitung gefügt werden kann.

Die Erfindung betrifft darüber hinaus eine Steckerbaugruppe umfassend:
- einen Gegensteckverbinder;
- einen Steckverbinder, welcher eine Aufnahmeöffnung aufweist, wobei die Aufnahmeöffnung derart ausgebildet ist, dass der Gegensteckverbinder in diese einsteckbar ist.

Der Gegensteckverbinder ist entsprechend den obigen Ausführungen ausgebildet.

Eine derart ausgebildete Steckerbaugruppe weist eine einfache Herstellbarkeit auf.

Erfindungsgemäß ist ein Verfahren zum Herstellen eines Gegensteckverbinders vorgesehen. Das Verfahren umfasst die Verfahrensschritte:
- Bereitstellen eines ebenen Bleches;
- Ziehen eines Napfes aus dem ebenen Blech;
- Umstülpen des Napfes zum Ausformen eines hülsenförmigen, im Querschnitt eine zentrale Längsachse des Steckverbinders umgebenden, ersten Mantelabschnittes und eines hülsenförmigen, im Querschnitt die zentrale Längsachse umgebenden, zweiten Mantelabschnittes, wobei der erste Mantelabschnitt vom zweiten Mantelabschnitt umgeben ist und der erste Mantelabschnitt mit dem zweiten Mantelabschnitt an einem ersten Längsende im Bereich des Einsteckabschnittes durch einen ersten Stirnwandabschnitt verbunden ist und wobei der zweite Mantelabschnitt im Bereich eines Einsteckabschnittes einen zylindrischen Dichtabschnitt aufweist.

Das erfindungsgemäße Verfahren weist den Vorteil auf, dass durch das Verfahren ein Gegensteckverbinder einfach herzustellen ist und darüber hinaus ein sehr geringes Gewicht bei einer für den Verwendungszweck ausreichenden Festigkeit aufweist.

Ferner kann vorgesehen sein, dass nach dem Ziehen des Napfes ein Arretierschlitz in den Napf gestanzt wird. Durch diese Maßnahme kann der Arretierschlitz einfach hergestellt werden.

Darüber hinaus ist vorgesehen, dass nach dem Umstülpen des Napfes eine Lasche aus dem zweiten Mantelabschnitt nach außen gebogen wird, wobei sich die Lasche über einen Umfangsbereich des zweiten Mantelabschnittes erstreckt und wobei sich die Lasche über einen Längsbereich des zweiten Mantelabschnittes erstreckt. Durch diese Maßnahme kann eine Lasche, welche als Verdrehsicherung dient, einfach hergestellt werden.

Vorteilhaft ist auch eine Ausprägung, gemäß welcher vorgesehen sein kann, dass nach dem Umstülpen des Napfes ein mittiges Loch aus dem Napf ausgestanzt wird. Durch diese Maßnahme kann eine Fluiddurchlässigkeit des Gegensteckverbinders erreicht werden, in dem der fertigungsbedingt entstandene Boden entfernt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Ausführungsvariante einer Steckerbaugruppe in einem Viertelschnitt;
- Fig. 2: eine Längsschnittdarstellung eines ersten Ausführungsbeispiels eines Gegensteckverbinders;
- Fig. 3: eine perspektivische Ansicht eines Viertelschnittes des ersten Ausführungsbeispiels des Gegensteckverbinders;
- Fig. 4: eine Längsschnittdarstellung eines zweiten Ausführungsbeispiels eines Gegensteckverbinders;
- Fig. 5: eine perspektivische Ansicht eines Viertelschnittes des zweiten Ausführungsbeispiels des Gegensteckverbinders;
- Fig. 6: einen ersten Verfahrensschritt zur Herstellung des zweiten Ausführungsbeispiels des Gegensteckverbinders;
- Fig. 7: einen zweiten Verfahrensschritt zur Herstellung des zweiten Ausführungsbeispiels des Gegensteckverbinders;
- Fig. 8: einen dritten Verfahrensschritt zur Herstellung des zweiten Ausführungsbeispiels des Gegensteckverbinders;
- Fig. 9: einen vierten Verfahrensschritt zur Herstellung des zweiten Ausführungsbeispiels des Gegensteckverbinders;
- Fig. 10: einen fünften Verfahrensschritt zur Herstellung des zweiten Ausführungsbeispiels des Gegensteckverbinders.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

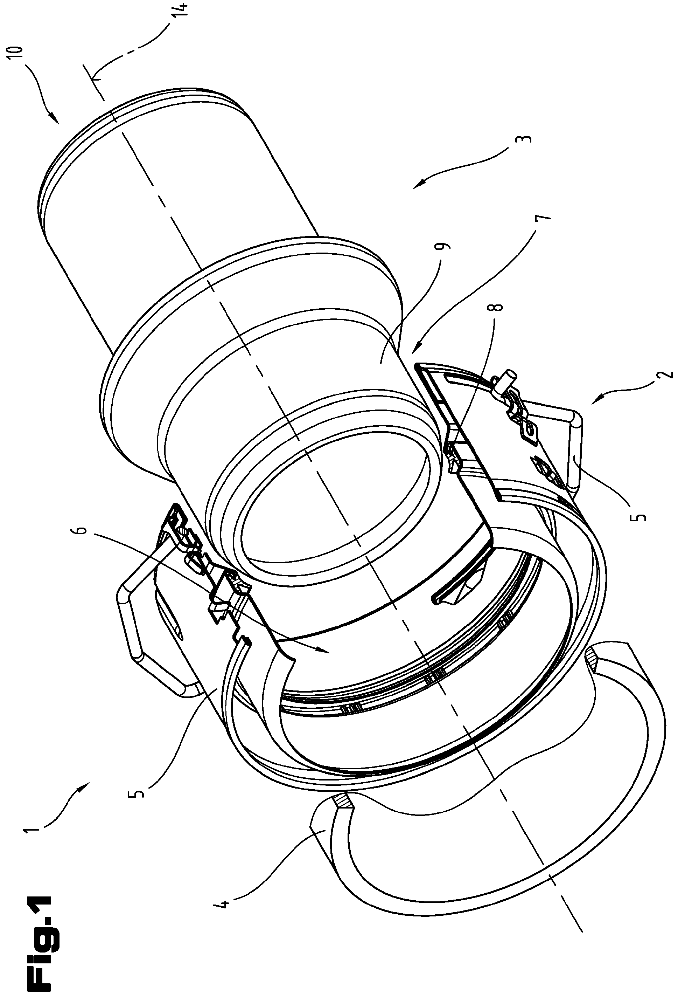

Fig. 1 zeigt eine perspektivische Ansicht einer Steckerbaugruppe 1 mit einem Steckverbinder 2, wobei diese in einem Viertelschnitt dargestellt sind. Weiters ist in Fig. 1 schematisch ein Gegensteckverbinder 3 dargestellt, welcher mit dem Steckverbinder 2 verbindbar ist. Das Zusammenwirken zwischen dem Steckverbinder 2 und dem Gegensteckverbinder 3 ist in der AT 509 196 B1 hinlänglich beschrieben.

Weiters ist schematisch ein Rohr 4 dargestellt, an welches der Steckverbinder 2 gekoppelt sein kann. Das Rohr 4 kann beispielsweise ein starres Element, wie etwa ein Kunststoffrohr sein. In einer andern Ausführungsvariante kann das Rohr 4 als flexible Leitung aus einem Gummiwerkstoff ausgebildet sein.

Der Steckverbinder 2 umfasst einen Hauptkörper, welcher vorzugsweise als einteiliges Umformteil, etwa als Tiefziehteil, insbesondere aus einem Edelstahlblech gebildet ist. Insbesondere kann auch vorgesehen sein, dass es sich hierbei um ein beschichtetes Stahlblech handeln kann oder auch eine Fertigung aus Stahlblech, welche im Anschluss beschichtet wird.

Die Steckerbaugruppe 1 wird vorzugsweise in einem Kraftfahrzeug, insbesondere in einem straßengebundenen Kraftfahrzeug mit Verbrennungsmotor, wie etwa einem PKW oder einem LKW eingesetzt.

Natürlich ist es auch denkbar, dass die Steckerbaugruppe 1 in einer sonstigen Anwendung mit Verbrennungsmotor verwendet wird. Dies kann beispielsweise der Einsatz der Steckerbaugruppe 1 in einem stationären Aggregat, in einem Schiffsmotor, in einem Flugzeugmotor, in einer Baumaschine, in batterie- oder hybridbetriebenen Fahrzeugen usw. sein.

Im Speziellen kann die Steckerbaugruppe 1 zum Verbinden verschiedener Bauteile der Frischluftzuführung zum Verbrennungsmotor eingesetzt werden. Beispielsweise kann vorgesehen sein, dass der Steckverbinder 2 mit dem entsprechenden Gegensteckverbinder 3 zur Verbindung zweier Teile im Ansaugbereich eines Turboladers vorgesehen ist. Weiters kann beispielsweise auch vorgesehen sein, dass eine derartige Steckerbaugruppe 1 in der vom Turbolader abgehenden Druckseite zur Verbindung zweier Bauteile eingesetzt wird. In wieder einer anderen Anwendung ist es auch denkbar, dass die Steckerbaugruppe zur Verbindung einer wasserführenden Leitung verwendet wird.

Wie aus Fig. 1 weiters ersichtlich, kann vorgesehen sein, dass der Steckverbinder 2 eine Aufnahmeöffnung 6 aufweist, welche zur Aufnahme eines Einsteckabschnittes 7 des Gegensteckverbinders 3 dient. Im Bereich der Aufnahmeöffnung 6 kann eine Dichtung 8 angeordnet sein, welche zur Herstellung einer abgedichteten Verbindung zwischen dem Steckverbinder 2 und dem Gegensteckverbinder 3 dient. Insbesondere kann vorgesehen sein, dass im zusammengesteckten Zustand des Steckverbinders 2 und des Gegensteckverbinders 3 die Dichtung 8, welche in der Aufnahmeöffnung 6 angeordnet ist, an einem zylindrischen Dichtabschnitt 9 des Gegensteckverbinders 3 anliegt.

Wie aus Fig. 1 weiters ersichtlich, kann vorgesehen sein, dass der Gegensteckverbinder 3 einen Bauteilanschluss 10 aufweist, welcher zum Anschluss eines fluidführenden oder gasführenden Bauteils dient. Das fluidführende oder gasführende Bauteil ist hierbei der Einfachheit halber nicht dargestellt.

Wie aus Fig. 1 weiters ersichtlich, kann vorgesehen sein, dass ein Arretierungselement 5 ausgebildet ist, welches aktiviert und deaktiviert werden kann, sodass der Steckverbinder 2 und der Gegensteckverbinder 3 bedarfsweise voneinander getrennt bzw. miteinander verbunden werden können. Das Arretierungselement 5 kann in eine Raststellung gebracht werden, in welcher der Steckverbinder 2 und der Gegensteckverbinder 3 zueinander gesichert sind. Weiters kann das Arretierungselement 5 in eine Freigabestellung gebracht werden, in welcher der Gegensteckverbinder 3 in den Steckverbinder 2 eingesetzt oder aus diesem herausgenommen werden kann. Insbesondere kann vorgesehen sein, dass das Arretierungselement 5 in Form einer Rastfeder ausgebildet ist.

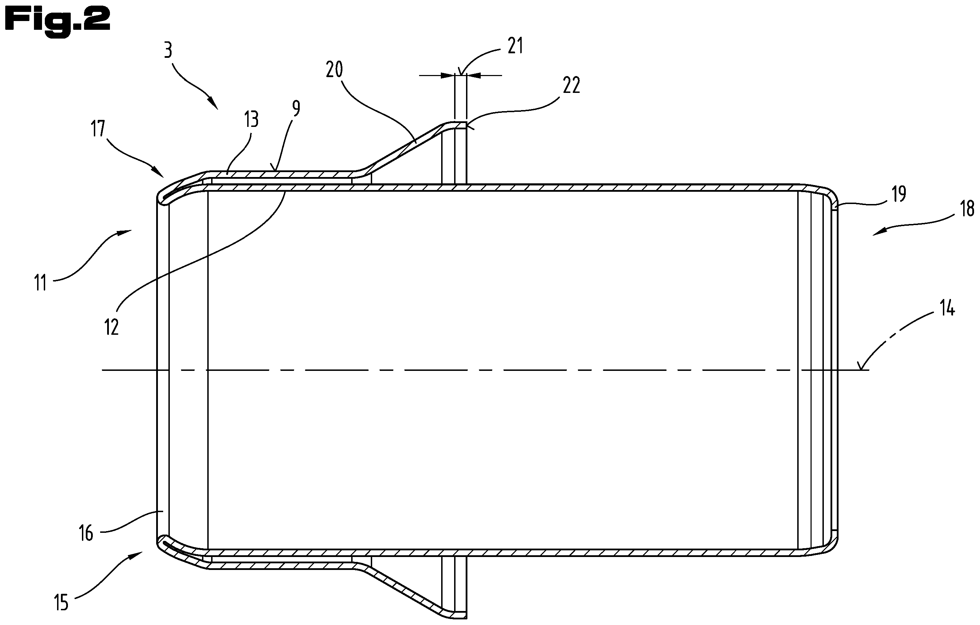

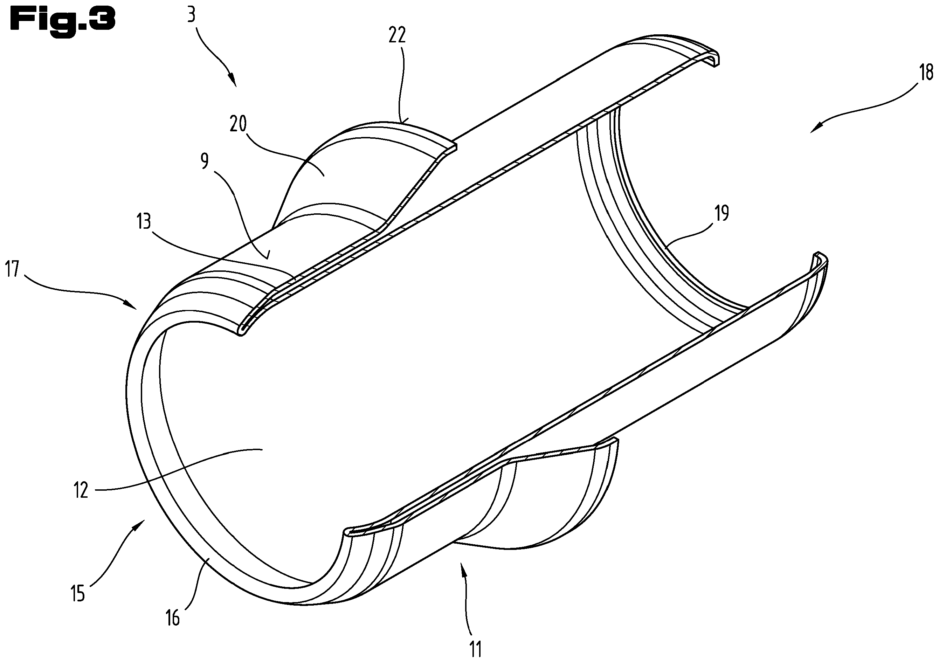

Fig. 2 zeigt eine Längsschnittdarstellung eines ersten Ausführungsbeispiels des Gegensteckverbinders 3. Fig. 3 zeigt das erste Ausführungsbeispiel des Gegensteckverbinders 3 in einer perspektivischen Darstellung eines Viertelschnittes.

Das erste Ausführungsbeispiel des Gegensteckverbinders 3 wird anhand einer Zusammenschau der Figuren 2 und 3 beschrieben.

Wie aus Fig. 2 ersichtlich, kann vorgesehen sein, dass der Gegensteckverbinder 3 als Blechumformteil ausgebildet ist. Weiter ist es auch denkbar, dass der Gegenstecker 3 als Kunststoffspritzgussteil ausgebildet ist. Insbesondere kann vorgesehen sein, dass der Gegensteckverbinder 3 einen Verbinderkörper 11 umfasst. Der Verbinderkörper 11 kann einen ersten Mantelabschnitt 12 und einen zweiten Mantelabschnitt 13 aufweisen. Die beiden Mantelabschnitte 12, 13 können zumindest in deren Grundform rotationssymmetrisch bezüglich einer zentralen Längsachse 14 des Verbinderkörpers 11 ausgebildet sein.

Wie aus Fig. 2 weiters ersichtlich, kann vorgesehen sein, dass der erste Mantelabschnitt 12 und der zweite Mantelabschnitt 13 an einem ersten Längsende 15 des Verbinderkörpers 11 mittels eines ersten Stirnwandabschnittes 16 miteinander gekoppelt sind. Insbesondere kann vorgesehen sein, dass der erste Mantelabschnitt 12 und der zweite Mantelabschnitt 13 sowie der erste Stirnwandabschnitt 16 aus einem einteiligen, durchgängigen Blech gebildet sind. Insbesondere kann vorgesehen sein, dass im Längsschnitt gesehen im Bereich des ersten Stirnwandabschnittes 16 das Blech um 180° umgeschlagen ist und vom ersten Mantelabschnitt 12 in den zweiten Mantelabschnitt 13 übergeht.

Wie aus Fig. 2 weiters ersichtlich, kann vorgesehen sein, dass der erste Mantelabschnitt 12 und der zweite Mantelabschnitt 13 im Bereich des ersten Längsendes 15 eine Querschnittsverjüngung 17 aufweisen. Der erste Mantelabschnitt 12 kann anschließend an die Querschnittsverjüngung 17 eine zylindrische Formgebung aufweisen. Wie aus Fig. 2 weiters ersichtlich, kann vorgesehen sein, dass der erste Mantelabschnitt 12 an einem zweiten Längsende 18 des ersten Mantelabschnittes 12 eine Verjüngung 19 aufweist. Insbesondere kann die Verjüngung 19 in Form eines 90° vom zylindrischen Abschnitt des ersten Mantelabschnittes 12 nach innen stehenden Kragen ausgebildet sein.

Wie aus Fig. 2 weiters ersichtlich, kann vorgesehen sein, dass der zweite Mantelabschnitt 13 anschließend an die Querschnittsverjüngung 17 den zylindrischen Dichtabschnitt 9 aufweist. Anschließend an den zylindrischen Dichtabschnitt 9 kann eine Querschnittserweiterung 20 ausgebildet sein. In einem Abstand 21 zur Querschnittserweiterung 20 kann eine Anlagefläche 22 zur Anlage des Arretierungselementes 5 ausgebildet sein. Wie aus Fig. 2 ersichtlich, kann vorgesehen sein, dass die Anlagefläche 22 dadurch ausgebildet ist, dass hier der zweite Mantelabschnitt 13 endet.

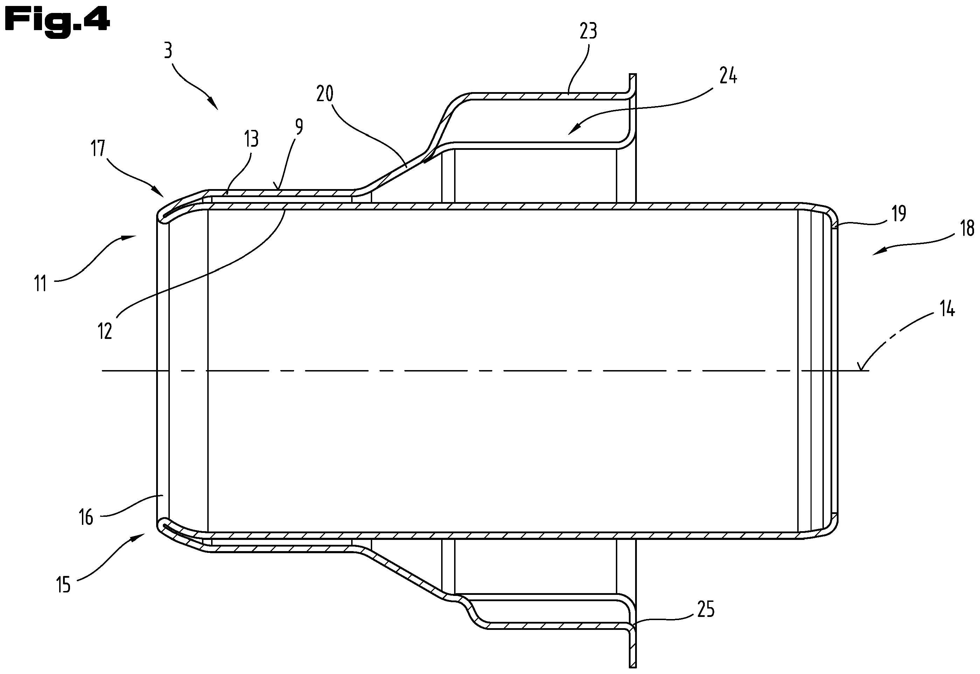

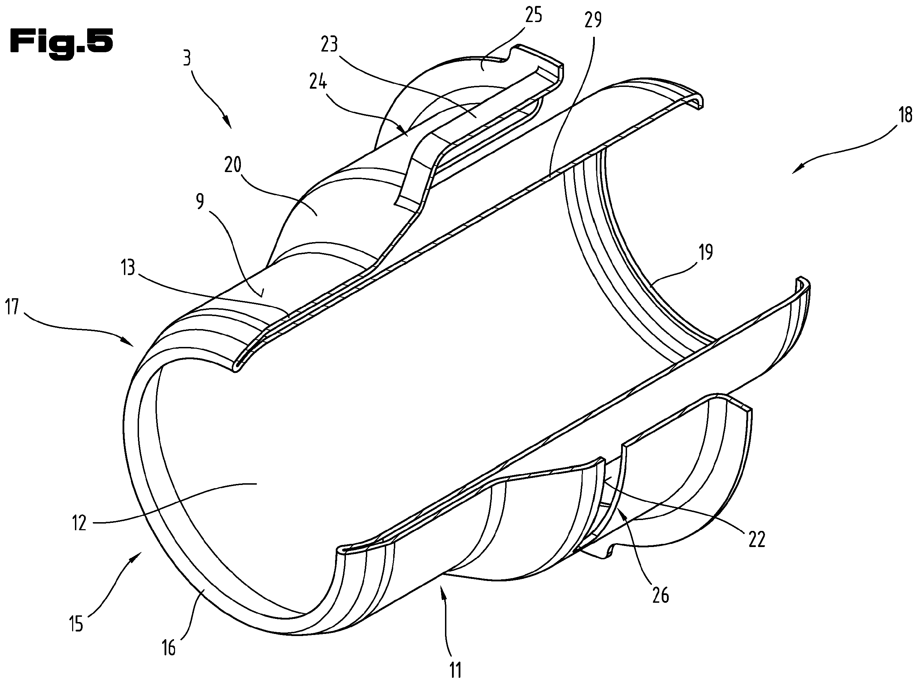

Fig. 4 zeigt eine Längsschnittdarstellung eines zweiten Ausführungsbeispiels des Gegensteckverbinders 3. Fig. 5 zeigt das zweite Ausführungsbeispiel des Gegensteckverbinders 3 in einer perspektivischen Darstellung eines Viertelschnittes.

In den Figuren 4 und 5 ist eine weitere und gegebenenfalls für sich eigenständige Ausführungsform des Gegensteckverbinders 3 gezeigt, wobei wiederum für gleiche Teile gleiche Bezugszeichen bzw. Bauteilbezeichnungen wie in den vorangegangenen Figuren 2 und 3 verwendet werden. Um unnötige Wiederholungen zu vermeiden, wird auf die detaillierte Beschreibung in den vorangegangenen Figuren 2 und 3 hingewiesen bzw. Bezug genommen. Wie aus Fig. 4 ersichtlich, kann vorgesehen sein, dass im zweiten Mantelabschnitt 13 eine Lasche 23 ausgebildet ist, welche aus dem zweiten Mantelabschnitt 13 heraus nach außen gebogen ist. Die Lasche 23 kann als Verdrehsicherung dienen.

Wie aus Fig. 5 ersichtlich, kann die Lasche 23 eine begrenzte Erstreckung über einen Umfangsbereich des zweiten Mantelabschnittes 13 bzw. über einen Längsbereich des zweiten Mantelabschnittes 13 aufweisen. Insbesondere kann vorgesehen sein, dass die Lasche 23 in einem Zylinderabschnitt 24 angeordnet ist.

Wie aus Fig. 4 weiters ersichtlich, kann vorgesehen sein, dass anschließend an den Zylinderabschnitt 24 ein Kragen 25 ausgebildet ist, welcher gegenüber dem Zylinderabschnitt 24 nach außen vorsteht. Der Kragen 25 kann umlaufend ausgebildet sein.

Wie aus Fig. 5 weiters ersichtlich, kann vorgesehen sein, dass im Zylinderabschnitt 24 des zweiten Mantelabschnitts 13 ein Arretierschlitz 26 ausgebildet ist, welcher zur Ausbildung der Anlagefläche 22 dient. Der Arretierschlitz 26 kann ebenfalls eine begrenzte Längserstreckung bzw. eine begrenzte Umfangserstreckung aufweisen.

Wie aus Fig. 5 ersichtlich, kann vorgesehen sein, dass im zweiten Mantelabschnitt 13 in Umfangsrichtung zueinander beabstandet mehrere Arretierschlitze 26 ausgebildet sind. Weiters kann vorgesehen sein, dass am zweiten Mantelabschnitt 13 in Umfangsrichtung zueinander beabstandet mehrere Laschen 23 ausgebildet sind.

Insbesondere kann vorgesehen sein, dass zwei Laschen 23 um 180° gegenüberliegend im zweiten Mantelabschnitt 13 ausgebildet sind.

Insbesondere kann vorgesehen sein, dass zwei Arretierschlitze 26 um 180° gegenüberliegend im zweiten Mantelabschnitt 13 angeordnet sind.

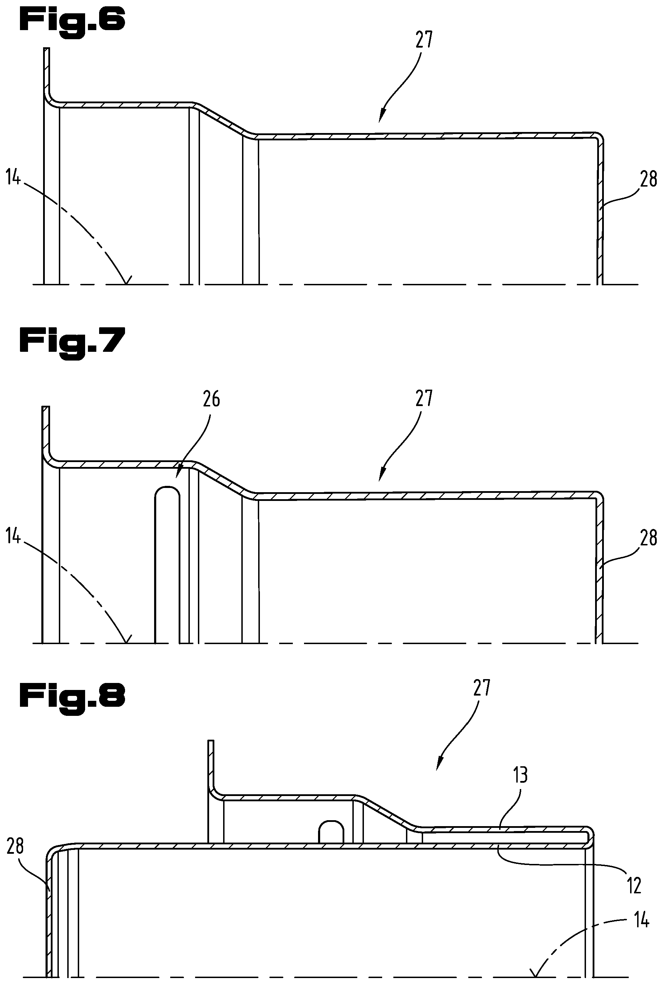

In den Figuren 6 bis 10 sind einzelne Verfahrensschritte zur Herstellung des zweiten Ausführungsbeispiels des Gegensteckverbinders 3 gezeigt.

Insbesondere wird der komplette außenliegende Teil des Verbinderkörpers 11 als zweiter Mantelabschnitt 13 bezeichnet. Wie aus Fig. 5 ersichtlich, kann vorgesehen sein, dass der zweite Mantelabschnitt 13 ausgehend vom ersten Längsende 15 in folgende Bereiche aufgeteilt ist: Querschnittsverjüngung 17, zylindrischer Dichtabschnitt 9, Querschnittserweiterung 20, Zylinderabschnitt 24, Kragen 25.

Beim ersten Ausführungsbeispiel gemäß Fig. 2 und Fig. 3 weist der Zylinderabschnitt 24 nur eine sehr kurze Länge auf.

Insbesondere wird der komplette innenliegende Teil des Verbinderkörpers 11 als erster Mantelabschnitt 12 bezeichnet. Wie aus Fig. 5 ersichtlich, kann vorgesehen sein, dass der erste Mantelabschnitt 12 ausgehend vom ersten Längsende 15 in folgende Bereiche aufgeteilt ist: Querschnittsverjüngung 17, Hauptteil 29 des ersten Mantelabschnittes 12, Verjüngung 19.

Die einzelnen Bereiche des ersten Mantelabschnittes 12 können in allen Ausführungsbeispielen gleich aussehen und gleich bezeichnet werden.

Fig. 6 zeigt einen ersten Verfahrensschritt zur Herstellung des zweiten Ausführungsbeispiels des Gegensteckverbinders 3. Wie aus Fig. 6 ersichtlich, kann vorgesehen sein, dass im ersten Verfahrensschritt aus dem ebenen Blechrohling ein Napf 27 gezogen wird. Der Napf 27 kann fertigungsbedingt einen Boden 28 aufweisen.

In einem zweiten Verfahrensschritt, wie er in Fig. 7 dargestellt ist, kann vorgesehen sein, dass aus dem Napf 27 ein Arretierschlitz 26 ausgestanzt wird.

Wie aus Fig. 8 ersichtlich, kann vorgesehen sein, dass in einem dritten Verfahrensschritt der Boden 28 des Napfes 27 umgestülpt bzw. nach innen durchgezogen wird, sodass sich der erste Mantelabschnitt 12 und der zweite Mantelabschnitt 13 ausbildet.

An dieser Stelle sei bemerkt, dass die Größenverhältnisse in den einzelnen Figuren 6 bis 10 nicht maßstabsgetreu sind, sondern zur übersichtlicheren Darstellung eine Längung bzw. eine Kürzung der Axialerstreckung gewisser Abschnitte des Gegensteckverbinders 3 vorgenommen wurde.

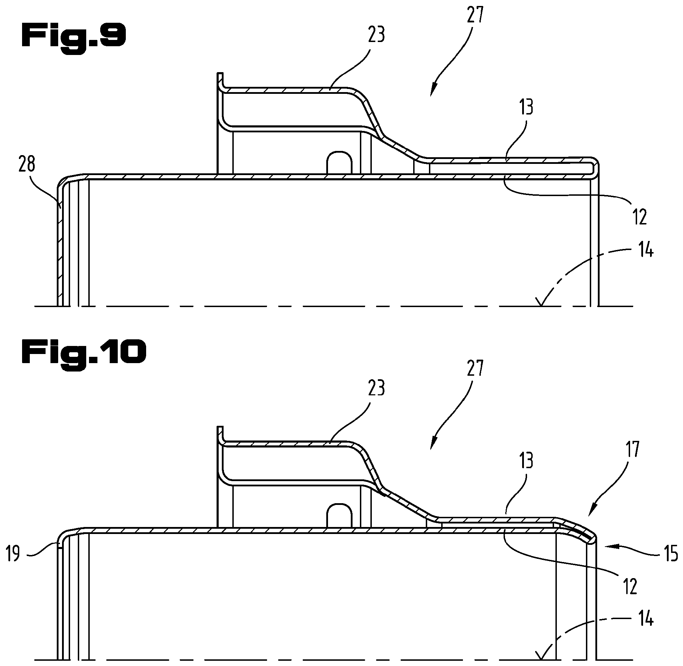

Wie aus Fig. 9 ersichtlich, kann vorgesehen sein, dass im vierten Verfahrensschritt die Lasche 23 aus dem zweiten Mantelabschnitt 13 nach außen gestanzt bzw. gebogen wird.

Wie aus Fig. 10 ersichtlich, kann vorgesehen sein, dass im fünften Verfahrensschritt im Bereich des ersten Längsendes 15 sowohl der erste Mantelabschnitt 12 als auch der zweite Mantelabschnitt 13 nach innen gebogen werden, sodass sich die Querschnittsverjüngung 17 ausbildet.

In einem weiteren Verfahrensschritt, welcher ebenfalls in Fig. 10 dargestellt ist, kann der Boden 28 ausgestanzt werden, sodass die Verjüngung 19 ausgebildet ist.

Die Verfahrensschritte zur Herstellung des ersten Ausführungsbeispiels des Gegensteckverbinders 3 sind ähnlich zu den in den Fig. 6 bis 10 dargestellten und beschriebenen Verfahrensschritten. Da das erste Ausführungsbeispiel des Gegensteckverbinders 3 einfacher herzustellen ist und hierbei gegenüber dem beschriebenen Verfahren einzelne Verfahrensschritte weggelassen werden, wird dieses Herstellverfahren nicht gesondert beschrieben bzw. in den Figuren dargestellt. Insbesondere werden zur Herstellung des ersten Ausführungsbeispiels die Verfahrensschritte entsprechend der Fig. 7 zur Ausstanzung des Arretierschlitzes 26 und der Verfahrensschritt nach Fig. 9 zur Herstellung der Lasche 23 nicht durchgeführt bzw. weggelassen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Steckerbaugruppe
- 2: Steckverbinder
- 3: Gegensteckverbinder
- 4: Rohr
- 5: Arretierungselement
- 6: Aufnahmeöffnung
- 7: Einsteckabschnitt
- 8: Dichtung
- 9: zylindrischer Dichtabschnitt
- 10: Bauteilanschluss
- 11: Verbinderkörper
- 12: erster Mantelabschnitt
- 13: zweiter Mantelabschnitt
- 14: Längsachse
- 15: erstes Längsende
- 16: erster Stirnwandabschnitt
- 17: Querschnittsverjüngung
- 18: zweites Längsende
- 19: Verjüngung
- 20: Querschnittserweiterung
- 21: Abstand
- 22: Anlagefläche
- 23: Lasche
- 24: Zylinderabschnitt
- 25: Kragen
- 26: Arretierschlitz
- 27: Napf
- 28: Boden
- 29: Hauptteil

## Patentansprüche

1. Gegensteckverbinder (3) zum Verbinden von Bauteilen für flüssige oder gasförmige Medien, umfassend einen Verbinderkörper (11) mit:
- einem Einsteckabschnitt (7), welcher zum Einstecken in eine Aufnahmeöffnung (6) eines Steckverbinders (2) dient;
- einem Bauteilanschluss (10), welcher zur Verbindung mit einem der Bauteile dient,
wobei der Verbinderkörper (11) als Blechumformteil ausgebildet ist, wobei der Verbinderkörper (11) einen hülsenförmigen, im Querschnitt eine zentrale Längsachse (14) des Verbinderkörpers (11) umgebenden, ersten Mantelabschnitt (12) und einen hülsenförmigen, im Querschnitt die zentrale Längsachse (14) umgebenden, zweiten Mantelabschnitt (13) aufweist, wobei der erste Mantelabschnitt (12) vom zweiten Mantelabschnitt (13) umgeben ist und der erste Mantelabschnitt (12) mit dem zweiten Mantelabschnitt (13) an einem ersten Längsende (15) im Bereich des Einsteckabschnittes (7) durch einen ersten Stirnwandabschnitt (16) verbunden ist und wobei der zweite Mantelabschnitt (13) im Bereich des Einsteckabschnittes (7) einen zylindrischen Dichtabschnitt (9) aufweist,
**dadurch gekennzeichnet, dass** zumindest eine Lasche (23) ausgebildet ist, welche aus dem zweiten Mantelabschnitt (13) nach außen gebogen ist, wobei sich die Lasche (23) über einen Umfangsbereich des zweiten Mantelabschnittes (13) erstreckt und wobei sich die Lasche (23) über einen Längsbereich des zweiten Mantelabschnittes (13) erstreckt.

2. Gegensteckverbinder (3) nach Anspruch 1, **dadurch gekennzeichnet, dass** im Bereich des Einsteckabschnittes (7) sowohl der erste Mantelabschnitt (12) als auch der zweite Mantelabschnitt (13) ausgehend vom zylindrischen Dichtabschnitt (9) zum ersten Längsende (15) des Verbinderkörpers (11) hin eine Querschnittsverjüngung (17) aufweisen.

3. Gegensteckverbinder (3) nach Anspruch 1 oder 2, **dadurch gekennzeichnet, dass** der zweite Mantelabschnitt (13) an der vom ersten Stirnwandabschnitt (16) abgewandten Seite des zylindrischen Dichtabschnittes (9) anschließend an den zylindrischen Dichtabschnitt (9) eine Querschnittserweiterung (20) aufweist.

4. Gegensteckverbinder (3) nach Anspruch 3, **dadurch gekennzeichnet, dass** der zweite Mantelabschnitt (13) an der vom zylindrischen Dichtabschnitt (9) abgewandten Seite in einem Abstand (21) zur Querschnittserweiterung (20) eine Anlagefläche (22) für ein Arretierungselement des Steckverbinders aufweist.

5. Gegensteckverbinder (3) nach Anspruch 4, **dadurch gekennzeichnet, dass** die Anlagefläche (22) umlaufend ausgebildet ist und ein zweites Längsende (18) des zweiten Mantelabschnittes (13) bildet.

6. Gegensteckverbinder (3) nach Anspruch 4, **dadurch gekennzeichnet, dass** ein Arretierschlitz (26) ausgebildet ist, in welchem die Anlagefläche (22) angeordnet ist, wobei der Arretierschlitz (26) den zweiten Mantelabschnitt (13), insbesondere den Zylinderabschnitt (24), durchdringt und sich über einen Umfangsbereich des zweiten Mantelabschnittes (13) erstreckt.

7. Gegensteckverbinder (3) nach einem der Ansprüche 1 bis 6, **dadurch gekennzeichnet, dass** der zweite Mantelabschnitt (13) im Bereich eines zweiten Längsendes (18) einen nach außen gebogenen Kragen (25) aufweist.

8. Gegensteckverbinder (3) nach einem der vorhergehenden Ansprüche, **dadurch gekennzeichnet, dass** der erste Mantelabschnitt (12) an einem zweiten Längsende (18) eine Verjüngung (19) aufweist.

9. Steckerbaugruppe (1) umfassend:
- einen Gegensteckverbinder (3);
- einen Steckverbinder (2), welcher eine Aufnahmeöffnung (6) aufweist, wobei die Aufnahmeöffnung (6) derart ausgebildet ist, dass der Gegensteckverbinder (3) in diese einsteckbar ist,
**dadurch gekennzeichnet, dass**
der Gegensteckverbinder (3) nach einem der vorhergehenden Ansprüche ausgebildet ist.

10. Verfahren zum Herstellen eines Gegensteckverbinders (3), umfassend die Verfahrensschritte:
- Bereitstellen eines ebenen Bleches;
- Ziehen eines Napfes (27) aus dem ebenen Blech;
- Umstülpen des Napfes (27) zum Ausformen eines hülsenförmigen Verbinderkörpers (11) mit einem, im Querschnitt eine zentrale Längsachse (14) des Verbinderkörpers (11) umgebenden, ersten Mantelabschnitt (12) und einem hülsenförmigen, im Querschnitt die zentrale Längsachse (14) umgebenden, zweiten Mantelabschnitt (13), wobei der erste Mantelabschnitt (12) vom zweiten Mantelabschnitt (13) umgeben ist und der erste Mantelabschnitt (12) mit dem zweiten Mantelabschnitt (13) an einem ersten Längsende (15) im Bereich des Einsteckabschnittes (7) durch einen ersten Stirnwandabschnitt (16) verbunden ist und wobei der zweite Mantelabschnitt (13) im Bereich eines Einsteckabschnittes (7) einen zylindrischen Dichtabschnitt (9) aufweist,
**dadurch gekennzeichnet, dass** nach dem Umstülpen des Napfes (27) zumindest eine Lasche (23) aus dem zweiten Mantelabschnitt (13) nach außen gebogen wird, wobei sich die Lasche (23) über einen Umfangsbereich des zweiten Mantelabschnittes (13) erstreckt und wobei sich die Lasche (23) über einen Längsbereich des zweiten Mantelabschnittes (13) erstreckt.

11. Verfahren nach Anspruch 10, **dadurch gekennzeichnet, dass** nach dem Ziehen des Napfes (27) ein Arretierschlitz (26) in den Napf (27) gestanzt wird.

12. Verfahren nach einem der Ansprüche 10 bis 11, **dadurch gekennzeichnet, dass** nach dem Umstülpen des Napfes (27) ein mittiges Loch aus dem Napf (27) ausgestanzt wird.

## Claims

1. A mating plug connector (3) for connecting components for liquid or gaseous media, comprising a connector body (11) with:
- an insertion section (7) which serves for insertion into a receiving opening (6) of a plug connector (2);
- a component connection (10) which serves for connection with one of the components, wherein the connector body (11) is configured as a formed sheet metal part, wherein the connector body (11) has a sleeve-shaped first casing section (12), which in cross-section surrounds a central longitudinal axis (14) of the connector body (11), and a sleeve-shaped second casing section (13), which in cross-section surrounds the central longitudinal axis (14), wherein the first casing section (12) is surrounded by the second casing section (13) and the first casing section (12) is connected to the second casing section (13) at a first longitudinal end (15) in the region of the insertion section (7) by a first front wall section (16), and wherein the second casing section (13) has a cylindrical sealing section (9) in the region of the insertion section (7),
**characterized in that** at least one tab (23) is formed which is bent outwardly from the second casing section (13), wherein the tab (23) extends over a circumferential area of the second casing section (13) and wherein the tab (23) extends over a longitudinal area of the second casing section (13).

2. The mating plug connector (3) according to claim 1, **characterized in that**, in the region of the insertion section (7), both the first casing section (12) and the second casing section (13) have a cross-sectional taper (17) starting from the cylindrical sealing section (9) towards the first longitudinal end (15) of the connector body (11).

3. The mating plug connector (3) according to claim 1 or 2, **characterized in that** the second casing section (13) has a cross-sectional enlargement (20) on the side of the cylindrical sealing section (9) facing away from the first front wall section (16) and adjoining the cylindrical sealing section (9).

4. The mating plug connector (3) according to claim 3, **characterized in that** the second casing section (13) has a contact surface (22) for a locking element of the plug connector on the side facing away from the cylindrical sealing section (9) at a distance (21) from the cross-sectional enlargement (20).

5. The mating plug connector (3) according to claim 4, **characterized in that** the contact surface (22) is formed circumferentially and forms a second longitudinal end (18) of the second casing section (13).

6. The mating plug connector (3) according to claim 4, **characterized in that** a locking slot (26) is formed in which the contact surface (22) is arranged, wherein the locking slot (26) penetrates the second casing section (13), in particular the cylinder section (24), and extends over a circumferential region of the second casing section (13).

7. The mating plug connector (3) according to one of claims 1 to 6, **characterized in that** the second casing section (13) has an outwardly curved collar (25) in the region of a second longitudinal end (18).

8. The mating plug connector (3) according to one of the preceding claims, **characterized in that** the first casing section (12) comprises a taper (19) at a second longitudinal end (18).

9. A plug assembly (1) comprising:
- a mating plug connector (3);
- a plug connector (2) having a receiving opening (6), wherein the receiving opening (6) is configured such that the mating plug connector (3) is insertable therein,
**characterized in that**
the mating plug connector (3) is configured according to one of the preceding claims.

10. A method for producing a mating plug connector (3), comprising the method steps:
- providing a flat metal sheet;
- pulling a cup (27) from the flat metal sheet;
- inverting the cup (27) to form a sleeve-shaped connector body (11) with a first casing section (12), which in cross-section surrounds a central longitudinal axis (14) of the connector body (11), and a sleeve-shaped second casing section (13), which in cross-section surrounds the central longitudinal axis (14), wherein the first casing section (12) is surrounded by the second casing section (13) and the first casing section (12) is connected to the second casing section (13) at a first longitudinal end (15) in the region of the insertion section (7) by a first front wall section (16), and wherein the second casing section (13) has a cylindrical sealing section (9) in the region of the insertion section (7),
**characterized in that** after the cup (27) was inverted, at least one tab (23) is bent outwardly from the second casing section (13), wherein the tab (23) extends over a circumferential area of the second casing section (13) and wherein the tab (23) extends over a longitudinal area of the second casing section (13).

11. The method according to claim 10, **characterized in that** a locking slot (26) is punched in the cup (27) after the cup (27) has been pulled.

12. The method according to one of claims 10 to 11, **characterized in that** after the cup (27) was inverted, a central hole is punched out of the cup (27).

## Revendications

1. Contre-connecteur mâle (3) pour connecter des composants destinés à des fluides liquides ou gazeux, comprenant un corps de connecteur (11) avec :
- une portion d'insertion (7), qui sert à être insérée dans une ouverture de réception (6) d'un connecteur mâle (2) ;
- un raccord de composant (10), qui permet la connexion à un des composants ;
dans lequel le corps de connecteur (11) est conçu comme une pièce emboutie en tôle, dans lequel le corps de connecteur (11) présente une première portion de chemise (12) en forme de manchon, entourant, en coupe transversale, un axe longitudinal central (14) du corps de connecteur (11), et une deuxième portion de chemise (13) en forme de manchon, entourant dans une coupe transversale l'axe longitudinal central (14), dans lequel la première portion de chemise (12) est entourée par la deuxième portion de chemise (13) et la première portion de chemise (12) est connectée avec la deuxième portion de chemise (13) au niveau d'une première extrémité longitudinale (15) dans la zone de la portion d'insertion (7) par l'intermédiaire d'une première portion de paroi frontale (16), et dans lequel la deuxième portion de chemise (13) présente une portion d'étanchéité cylindrique (9) dans la zone de la portion d'insertion (7),
**caractérisé en ce qu'**au moins une patte (23) est formée, qui est pliée vers l'extérieur à partir de la deuxième portion de chemise (13), dans lequel la patte (23) s'étend sur une zone circonférentielle de la deuxième portion de chemise (13) et dans lequel la patte (23) s'étend sur une zone longitudinale de la deuxième portion de chemise (13).

2. Contre-connecteur mâle (3) selon la revendication 1, **caractérisé en ce que**, dans la zone de la portion d'insertion (7), la première portion de chemise (12) ainsi que la deuxième portion de chemise (13), à partir de la portion d'étanchéité cylindrique (9) vers la première extrémité longitudinale (15) du corps de connecteur (11), présentent un rétrécissement de section transversale (17).

3. Contre-connecteur mâle (3) selon la revendication 1 ou 2, **caractérisé en ce que** la deuxième portion de chemise (13), du côté opposé à la première portion de paroi frontale (16) de la portion d'étanchéité cylindrique (9), présente une extension de section transversale (20) qui se raccorde à la portion d'étanchéité cylindrique (9).

4. Contre-connecteur mâle (3) selon la revendication 3, **caractérisé en ce que** la deuxième portion de chemise (13), du côté opposé à la portion d'étanchéité cylindrique (9), présente une surface d'appui (22) pour un élément de verrouillage du connecteur mâle à une distance (21) de l'extension de section transversale (20).

5. Contre-connecteur mâle (3) selon la revendication 4, **caractérisé en ce que** la surface d'appui (22) est formée de manière circonférentielle et constitue une deuxième extrémité longitudinale (18) de la deuxième portion de chemise (13).

6. Contre-connecteur mâle (3) selon la revendication 4, **caractérisé en ce qu'**une fente de verrouillage (26) est formée, dans laquelle la surface d'appui (22) est disposée, la fente de verrouillage (26) traversant la deuxième portion de chemise (13), en particulier la portion cylindrique (24), et s'étendant sur une zone circonférentielle de la deuxième portion de chemise (13).

7. Contre-connecteur mâle (3) selon l'une des revendications 1 à 6, **caractérisé en ce que** la deuxième portion de chemise (13) présente un col (25) plié vers l'extérieur dans la zone d'une deuxième extrémité longitudinale (18).

8. Contre-connecteur mâle (3) selon l'une des revendications précédentes, **caractérisé en ce que** la première portion de chemise (12) présente un rétrécissement (19) à une deuxième extrémité longitudinale (18).

9. Ensemble de connecteurs (1) comprenant :
- un contre-connecteur mâle (3) ;
- un connecteur mâle (2), lequel présente une ouverture de réception (6), l'ouverture de réception (6) étant conçue de telle sorte que le contre-connecteur mâle (3) peut y être inséré,
**caractérisé en ce que**
le contre-connecteur mâle (3) est conçu selon l'une des revendications précédentes.

10. Procédé de fabrication d'un contre-connecteur mâle (3), comprenant les étapes de procédé :
- fourniture d'une tôle plane ;
- emboutissage d'une coupelle (27) à partir de la tôle plane ;
- retournement de la coupelle (27) pour former un corps de connecteur (11) en forme de manchon avec une première portion de chemise (12) entourant dans une coupe transversale un axe longitudinal central (14) du corps de connecteur (11), et une deuxième portion de chemise (13) entourant dans une coupe transversale l'axe longitudinal central (14), la première portion de chemise (12) étant entourée par la deuxième portion de chemise (13) et la première portion de chemise (12) étant connectée à la deuxième portion de chemise (13) à une première extrémité longitudinale (15) dans la zone de la portion d'insertion (7) par une première portion de paroi frontale (16), et la deuxième portion de chemise (13) présentant une portion d'étanchéité cylindrique (9) dans la zone d'une portion d'insertion (7),
**caractérisé en ce que**, après le retournement de la coupelle (27), au moins une patte (23) est pliée vers l'extérieur à partir de la deuxième portion de chemise (13), la patte (23) s'étendant sur une zone circonférentielle de la deuxième portion de chemise (13) et la patte (23) s'étendant sur une zone longitudinale de la deuxième portion de chemise (13).

11. Procédé selon la revendication 10, **caractérisé en ce que**, après l'emboutissage de la coupelle (27), une fente de verrouillage (26) est poinçonnée dans la coupelle (27).

12. Procédé selon l'une des revendications 10 à 11, **caractérisé en ce que**, après le retournement de la coupelle (27), un trou central est poinçonné dans la coupelle (27).
